Europäisches Patentamt

European Patent Office

Office européen des brevets

(11) Publication number: **0 246 685 B1**

# EUROPEAN PATENT SPECIFICATION

(45) Date of publication of patent specification: **22.01.92**  (51) Int. Cl.⁵: **B29C 51/14**

(21) Application number: **87200741.4**

(22) Date of filing: **16.04.87**

(54) **Method for stacking billets.**

(30) Priority: **16.05.86 US 863753**

(43) Date of publication of application:
**25.11.87 Bulletin 87/48**

(45) Publication of the grant of the patent:
**22.01.92 Bulletin 92/04**

(84) Designated Contracting States:
**BE DE ES FR GB IT LU NL**

(56) References cited:
**EP-A- 0 084 135**
**US-A- 1 382 208**

**EUROPEAN PLASTICS NEWS, vol. 11, no. 8, August-September 1984, pages 44,47,48, Sutton, Surrey, GB; "Heightened interest in coextrusion for the packaging sector"**

(73) Proprietor: **SHELL INTERNATIONALE RE-SEARCH MAATSCHAPPIJ B.V.**
**Carel van Bylandtlaan 30**
**NL-2596 HR Den Haag(NL)**

(72) Inventor: **Coffman, Paul Mahoney**
**1819 Cherry Bend Drive**
**Houston, Texas 77077(US)**

(74) Representative: **Tuijn, Jan Warnaar et al**
**Shell Internationale Research Maatschappij B.V., Patents, Licensing & Trade Marks Division, P.O. Box 302**
**NL-2501 CH The Hague(NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention is concerned with a method for producing thermoformed laminated articles of manufacture, preferably containers. In laminating of thermoplastic polymers by coextrusion, the more layers one is attempting to coextrude, the more difficult coextrusion is and the more expensive the coextrusion equipment. In many typical coextrusion processes, three, five or seven layers of materials are coextruded through one coextrusion die. For some applications, one or more of the coextrusion layers are barrier polymers. The barrier layer material is extremely important in that it protects the contents of the container from moisture, oxygen and other gases and from escaping aromas and flavours. Problems arise when the barrier layer contains a hole or is torn, or for some reason, is a discontinuous layer in the coextruded five, seven or nine layer sheet. A flawed barrier layer may lead to product loss or contamination. Thus, the entire extruded sheet containing the flawed barrier layer must be discarded.

To minimize this risk, it would be advantageous to have two distinct and separate sheets, each with barrier layers. In the event one of the barrier layers is flawed, the other barrier layer provides adequate protection. In this sense containers produced by thermoforming are provided with double protection by barrier layers. The present invention is related to first making billets of several layers by coextrusion and then stacking these billets in such a way that they adhere to each other and can be formed into a single product, instead of attempting to coextrude many different layers and then thermoforming single billets into the product.

It is simpler to coextrude three or five layers than nine. The idea of the present invention permits one to make multiple barrier layer materials from a single coextrusion line instead of necessitating two or more different coextrusion lines.

This invention relates to a process for producing thermoformed articles consisting of $(1 + xn-x)$ laminated layers comprising the successive steps of

    a) preparing a thermoplastic polymer laminate by coextrusion, each laminate comprising n layers wherein n equals 3, 5 or 7, the layers being symmetrically arranged around a central layer;

    b) producing billets from said laminates;

    c) stacking x billets together wherein x equals 2, 3 or 4;

    d) adhering the billets in each stack together;

    e) thermoforming each stack into an article of manufacture.

The process of this invention is of particular importance to one or more of the following embodiments, taken either separately or in combination: 1) use of polypropylene as the thermoplastic polymer in at least one of the coextruded laminate layers, 2) use of an adhesive as the thermoplastic polymer in at least one of the coextruded laminate layers, of particular interest in this respect is the adhesive polymer commercially available under the registered trade name ADMER, 3) use of a polymer of vinylidene dichloride (SARAN) or a copolymer of ethylene and vinylalcohol (EVOH) or a hydrolized copolymer of ethylene and vinylacetate (EVAL) as the thermoplastic barrier polymer in at least one of the coextruded laminate layers. It is also possible to arrange for stacking the billets to form one coherent stacked unit by applying an adhesive, e.g. a powdered thermoplastic polymer or a thin film having a relatively low melting point, on the upper or lower surface of the separate billets to be stacked. Heating of the stack to effect melting of the adhesive or of the film then ensures the production of one coherent stack.

Coextrusion to form the laminate in accordance with step a) of the process of this invention can be effected by straight slit extrusion or by tubular film extrusion followed by flattening of the tube at a relatively high temperature to produce one central layer of increased thickness by joining both sides of the inner layer of the flattened tubular film. Slit extrusion can be employed to produce symmetrical laminates, for example two extruders positioned to one slit die may produce a polypropylene/EVAL/polypropylene laminate, three extruders positioned to one slit die may produce a polypropylene/ADMER/EVOH/ADMER/polypropylene laminate, etc. A stack of two billets of the latter laminate will produce, upon joining the two outer polypropylene layers to form one single layer, a nine layer laminate in a production unit that comprises only three extruders. Similarly a stack of three billets from a three layer laminate will produce a seven layer product in a production unit comprising only two extruders.

Preferred values of x and n to be employed in the process of this invention are 3 or 5, respectively 2 or 3.

The billets may be round, square, rectangular, or polygonal, dependent upon the shaping process to be employed in step e). Non-round billets will produce less scrap material. Forming one coherent stack of billets, following stacking may also comprise such techniques as spin welding, hot plate welding or other heating methods to achieve the envisaged adhesion or preferably fusion of the mating surfaces of the billets.

Thermoforming methods to form articles of manufacture such as cups, buckets, boxes, beakers, cans or similar containers are known per se and do not form part of this invention.

The temperatures to be employed in thermoforming step e) should be at least above the melting point of the lowest melting thermoplastic polymer which is not used for adhesive purposes. The latter, if employed, is already melted during the stacking and heating operation to form one coherent stack, that as such allows easy handling as a single unit in thermoforming step e).

Preferred adhesives are those melting below 149 °C. Preferred laminates produced in step a) are those in which the central layer is made of barrier polymer and the other layers are made of polypropylene. Billets produced from such preferred laminates are heated in step d) at sufficiently elevated temperatures to ensure at least partial fusion of the polypropylene outer layers. Preferred temperatures to achieve this in attractively short cycle times are those lying in the range of from 170 to 181 °C. Preferred temperatures to be employed in step e) are those above the melting point of the barrier polymer but below the melting point of the polymer in the protecting outer layers of the laminate obtained in step a).

Example 1

Five layer billets, polypropylene/adhesive/EVOH/adhesive/polypropylene, are produced by triple coextrusion using three extruders. Stacks are produced by positioning three billets on top of each other. The billets are transferred to a hot plate press and heated to 155 °C under heavy pressure and then transferred to a light press at the same temperature and a pressure of 103 kPa.

Subsequently the stacks are transferred to an infra-red furnace where they are heated to 181 °C, thus effecting fusion of the polypropylene joining layers.

Subsequent thermoforming to cans produces barrier cans for soft drinks, the cylindrical wall of which comprises a thirteen layer laminate structure with three barrier layers. As set out hereinbefore, this thirteen layer laminate is produced in a production line that has only three extruders.

Example 2

Two 50 ml billets each of five layers of polypropylene/ADMER (an adhesive available from Mitsui Chemical Co.)/EVAL/ADMER/polypropylene were stacked and a heavy gauge six ounce juice cup made. The resulting cup product contained nine layers, including two of EVAL. Billets of unlike structure could be stacked additionally; for example, a nine layer structure containing both EVAL and SARAN barrier polymers could be constructed.

Example 3

Two billets, each of a three layer EVAL/adhesive/high impact polystyrene, are stacked against each other, EVAL joining EVAL, and used to make a six ounce juice cup of a five layer laminate.

Example 4

Two billets, each of five layer polypropylene/adhesive/EVAL/adhesive/polypropylene are prepared and stacked to make nine layer billets. Polypropylene adheres to polypropylene and thus is adhesive with respect to itself.

**Claims**

1. A process for producing thermoformed articles consisting of (1+xn-x) laminated layers comprising the successive steps of
   a) preparing a thermoplastic polymer laminate by coextrusion, each laminate comprising n layers wherein n equals 3, 5 or 7, the layers being symmetrically arranged around a central layer;
   b) producing billets from said laminates;
   c) stacking x billets together wherein x equals 2, 3 or 4;
   d) adhering the billets in each stack together;
   e) thermoforming each stack into an article of manufacture.

2. A process as claimed in claim 1, in which the thermoformed article is a container.

3. A process as claimed in claim 1, in which step a) comprises straight slit coextrusion.

4. A process as claimed in claim 1, in which step a) comprises tubular film coextrusion, followed by flattening of the tube.

5. A process as claimed in any one of claims 1 to 4, in which step d) comprises heating the billets.

6. A process as claimed in any one of claims 1 to 5, in which the laminate produced in step a) comprises at least one layer of polypropylene and at least one layer of a barrier polymer.

7. A process as claimed in claim 6, in which the barrier polymer is a copolymer of ethylene and vinylalcohol or a hydrolized copolymer of ethylene and vinylacetate.

8. A process as claimed in claim 6, in which the barrier polymer is a polymer of vinylidene dichloride.

9. A process as claimed in any one of claims 1 to 4 or 6 to 8, in which step d) comprises the use of intermediate adhesive layers.

10. A process as claimed in claim 9, in which the adhesive layer is one of the coextruded laminate layers.

## Revendications

1. Un procédé pour produire des articles thermoformés composés de (1 + xn - x) couches laminées, comprenant les étapes successives consistant à :

   a) préparer un laminé de polymère thermoplastique par co-extrusion, chaque laminé comprenant n couches, avec n étant égal à 3, 5 ou 7, les couches étant disposées de façon symétrique par rapport à une couche centrale;
   b) produire des ébauches à partir desdits laminés;
   c) empiler x ébauches ensemble, avec x étant égal à 2,3 ou 4;
   d) faire coller ensemble les ébauches de chaque empilage;
   e) thermoformer chaque empilage pour former un article de fabrication.

2. Un procédé selon la revendication 1, dans lequel l'article thermoformé est un récipient.

3. Un procédé selon la revendication 1, dans lequel l'étape a) comprend la co-extrusion en fente droite.

4. Un procédé selon la revendication 1, dans lequel l'étape a) comprend la co-extrusion d'un film tubulaire suivie de l'aplatissement du tube.

5. Un procédé selon l'une des revendications 1 à 4, dans lequel l'étape d) comprend le fait de chauffer les ébauches.

6. Un procédé selon l'une des revendications 1 à 5, dans lequel le laminé produit au cours de l'étape a) comprend au moins une couche de polypropylène et au moins une couche d'un polymère de barrière.

7. Un procédé selon la revendication 6, dans lequel le polymère de barrière est un copolymère d'éthylène et d'alcool vinylique ou un copolymère hydrolysé d'éthylène et d'acétate de vinyle.

8. Un procédé selon la revendication 6, dans lequel le polymère de barrière est un polymère de bichlorure de vinylidène.

9. Un procédé selon l'une des revendications 1 à 4 ou 6 à 8, dans lequel l'étape d) comprend l'utilisation de couches adhésives intermédiaires.

10. Un procédé selon la revendication 9, dans lequel la couche adhésive est l'une des couches laminées co-extrudées.

## Patentansprüche

1. Verfahren zur Herstellung von heißgeformten Formkörpern, bestehend aus (1 + xn-x) laminierten Schichten, umfassend die aufeinanderfolgenden Stufen von

   a) Herstellung eines thermoplastischen Polymerlaminats durch Coextrudieren, wobei jedes Laminat n Schichten umfaßt, wobei n = 3, 5 oder 7 ist, und die Schichten symmetrisch um eine zentrale Schicht angeordnet sind;
   b) Herstellung von Vorformlingen (billets) aus den Laminaten;
   c) Aufeinanderstapeln von x Vorformlingen, wobei x = 2, 3 oder 4 ist;
   d) Verkleben der Vorformlinge in jedem Stapel miteinander, und
   e) thermisches Verformen jedes Stapels zu einem Formkörper-Handelsprodukt.

2. Verfahren nach Anspruch 1, wobei der heißgeformte Formkörper ein Behälter ist.

3. Verfahren nach Anspruch 1, wobei Stufe a) eine Coextrusion durch einen geraden Schlitz umfaßt.

4. Verfahren nach Anspruch 1, wobei Stufe a) eine Mehrschicht-Schlauchfolien-Herstellung umfaßt, gefolgt von einem Flachlegen des Schlauches.

5. Verfahren nach einem der Ansprüche 1 bis 4, wobei Stufe d) ein Erhitzen der Vorformlinge umfaßt.

6. Verfahren nach einem der Ansprüche 1 bis 5, wobei das in Stufe a) hergestellte Laminat mindestens eine Schicht aus Polypropylen und mindestens eine Schicht aus einem Sperrschichtpolymer umfaßt.

7. Verfahren nach Anspruch 6, wobei das Sperrschichtpolymer ein Polymer aus Ethylen und Vinylalkohol oder ein hydrolisiertes Copolymer aus Ethylen und Vinylacetat ist.

8. Verfahren nach Anspruch 6, wobei das Sperr-schichtpolymer ein Polymer aus Vinylidendi-chlorid ist.

9. Verfahren nach einem der Ansprüche 1 bis 4 oder 6 bis 8, wobei Stufe d) die Verwendung von Zwischenschicht-Klebeschichten umfaßt.

10. Verfahren nach Anspruch 9, wobei die Klebe-schicht eine der coextrudierten Laminatschich-ten ist.